# EUROPEAN PATENT APPLICATION

(11) **EP 1 016 908 A2**
(43) Date of publication of application: **05.07.2000**
(21) Application number: 99204439.6
(22) Date of filing: 21.12.1999
(51) Int. Cl.: G03C 3/00, B65H 75/14, B65H 75/26, G11B 23/037, B29C 45/00

(54) **Two-part spool with flanges**

(30) Priority: 31.12.1998 US 224479
(71) Applicant: EASTMAN KODAK COMPANY, Rochester, New York 14650 (US)
(72) Inventor: Robertson, Jeffrey Charles, Eastman Kodak Company, Rochester, New York 14650-2201 (US); Semmler, Bruce John, Eastman Kodak Company, Rochester, New York 14650-2201 (US)
(74) Representative: Parent, Yves

(57) **Abstract**

A spool comprised of a pair of complementary spool members. Each spool member includes a cylindrical portion and a flange having an inwardly facing surface and an outwardly facing surface. The spool member is made of a plastic material and is formed by an injection molding process such that the inwardly facing surface of each spool member is formed against a unitary mold component of an injection mold whereby the inwardly facing surface is substantially free of imperfections and blemishes.

## Description

### FIELD OF THE INVENTION

The present invention relates generally to a spool, such as may be used to support a length of web material, particularly photographic web material or other light sensitive material. The present invention is more particularly directed to a spool formed from a plastic material and including a flange having a smooth, substantially blemish free surface on an inwardly facing surface.

### BACKGROUND OF THE INVENTION

Spools have been used to support various materials such as wire, threads, and yarns. US Patent Nos. 2,190,013 (*Byers*), 3,334,841 (*Burhop*) relate to spools for supporting wire. US Patent No. 4,406,422 (*Philips*) relates to a spool supporting threads and yarns.

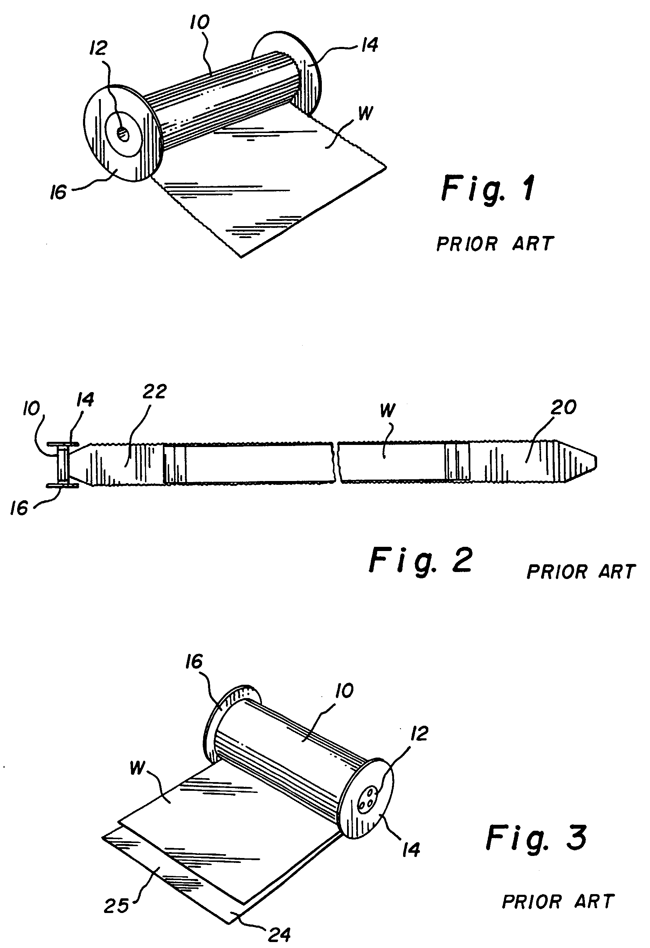

Spools have also been used to support web material, for example, photographic web material or other light sensitive material. The spool has a cylindrical portion onto which the web material is wound, and may further include a flange disposed at each end of the cylindrical portion to provide protection for the web material and to provide guidance for the edges of the web material during winding/unwinding. Figure 1 shows a spool 10 having a core 12 and a pair of flanges 14,16 disposed at opposite ends of core 12. Web material W is wound between the flanges. US Patent No. 1,261,747 (*McCurdy*), US Patent No. 1,454,812 (*Jones*), US Patent No. 1,454,813 (*Jones*), and US Patent No. 1,454,814 (*Jones*), incorporated herein by reference, teach a spool used to support photographic web material wherein the spool includes a pair of flanges.

A light shielding material (e.g., an opaque material) can be used to protect the light sensitive material. That is, an opaque material wound about the light-sensitive material can form a roll package which provides a light shield for the light-sensitive material. By such an arrangement, the opaque material may restrict the ingress of light between the edges of the convolutions of the wound light-sensitive material. As such, the roll package would be light-tight and could therefore be loaded/unloaded into a cooperating apparatus (e.g., a camera) in a white-light environment without adverse affects to the wound light-sensitive material.

For example, as shown in Figure 2, a roll package includes an opaque leader 20 disposed at one end of the web material, and a trailer 22 disposed at the other end of the web material, with the trailer being attached to spool 10. Accordingly, when web material W is wound about spool 10 between end flanges 14,16, first the trailer is wound, then the web material is wound, with the leader being wound about the web material. Such a roll packaging configuration (i.e., trailer/web/leader) is available in a type of film package generally referred as a 220 format film package.

In another roll packaging configuration, illustrated in Figure 3 and generally referred to as a 120 format film package, a backing material 24 (i.e., a light shielding material) is disposed on one side of the web material along the entire length of the web material. The width of backing material 24 is greater than the width of the web material. In addition, the length of backing material is greater than the length of the web material such that an extending portion 25 (herein after referred to as leader L) of backing material 24 extends beyond the length of the web material. The backing material may be attached to one end of the web material. Accordingly, when the web material and backing material are wound onto the spool between the end flanges, the wound convolutions alternate between the web material and backing material.

In yet a further roll packaging configuration (not shown), a roll package includes an opaque leader disposed at one end of the web material, and the other end of the web material being attached to the spool. Accordingly, when the web material W is wound about the spool between the end flanges, first the web material is wound, with the leader being wound about the web material to form a light-tight roll package.

While such light-tight roll packages have achieved a certain degree of success in providing light-tight protection for light-sensitive web material, light may be able to enter between the edges of the convolutions of the wound light-sensitive material. Changes in the design, materials, and manufacturing methods of the spools have reduced manufacturing costs and promoted manufacturability. For example, while the spools were initially comprised of wood, metal, or a combination thereof, with the development of plastic materials and the injection molding process, spools used for winding light sensitive web material are now generally comprised of plastic materials. Yet, a need continues to exist for an improved spool which promotes light-tightness in a roll package.

### SUMMARY OF THE INVENTION

An object of the present invention is to provide a spool for supporting web material.

Another object of the present invention is to provide such a spool which promotes the shielding of light sensitive web material from light.

Still another object of the present invention is to provide such a spool which includes flanges free of imperfections and blemishes

Yet another object of the present invention is to provide such a spool which is readily manufacturable from a plastic material by means of injection molding.

These objects are given only by way of illustrative example. Thus, other desirable objectives and advantages inherently achieved by the disclosed invention may occur or become apparent to those skilled in the art. The invention is defined by the appended claims.

The present invention provides a spool having a pair of flanges. An inwardly facing surface of each flange includes a substantially blemish free planar surface. When a light shielding material is wound about the spool, the edges of the light shielding material are held in intimate contact with the substantially blemish free planar portion. Accordingly, the cooperation between the light shielding material and the substantially planar portion of the flanges forms a light seal barrier. A spool having such a substantially blemish free planar surface is manufacturable by means of injection molding.

According to one aspect of the invention, there is provided a spool comprised of a pair of complementary spool members. Each spool member includes a cylindrical portion and a flange having an inwardly facing surface and an outwardly facing surface. The spool member is made of a plastic material and is formed by an injection molding process such that the inwardly facing surface of each spool member is formed against a unitary mold component of an injection mold whereby the inwardly facing surface is substantially free of imperfections and blemishes.

According to another aspect of the invention, there is provided a spool for supporting a length of photosensitive web material. The spool is comprised of a pair of complementary spool members formed of a plastic material by an injection molding process. Each of the spool members includes a cylindrical portion and a flange with the flange having an outer edge and an inwardly facing surface. Each inwardly facing surface includes a substantially planar area adjacent the outer edge which has a surface roughness of less than 25 microinches.

According to yet another aspect of the invention, there is provided a roll package. The roll package includes a spool, a length of web material wound about the spool, and a length of a light-shielding material wound about the wound length of web material. The spool is comprised of a pair of complementary spool members formed of a plastic material by an injection molding process. Each of the spool members includes a cylindrical portion and a flange with the flange having an outer edge and an inwardly facing surface. Each inwardly facing surface includes a substantially planar area adjacent the outer edge having a surface roughness of less than 25 microinches.

According to still another aspect of the invention, there is provided a method of making a spool member having a cylindrical portion and a flange having an inwardly facing surface. The method includes providing a mold cavity; injecting molten plastic material into the mold cavity; forming the inwardly facing surface against a unitary mold component of the mold cavity; and ejecting the molded spool in a direction normal to the inwardly facing surface.

The present invention provides a spool for supporting web material. The spool includes a pair of flanges free of imperfections, whereby an interaction between the flanges and a light shielding material (e.g., a leader or interleaving material) forms a light-tight seal. The spool is configured such that it is readily manufacturable from a plastic material by means of injection molding.

### BRIEF DESCRIPTION OF THE DRAWINGS

The foregoing and other objects, features, and advantages of the invention will be apparent from the following more particular description of the preferred embodiments of the invention, as illustrated in the accompanying drawings.
FIG. 1 shows a perspective view of a prior art roll package including a spool having a core and a pair of end flanges, a web material, and an opaque leader attached to web material.
FIG. 2 shows a top view of a prior art roll package including a spool, a trailer, web material, and a leader.
FIG. 3 shows a perspective view of a prior art roll package configuration including a backing material.
FIG. 4 shows a cross-sectional view of one end of a spool in accordance with the present invention.
FIG. 5 shows a cross-sectional view of one end of a roll package in accordance with the present invention, taken along the longitudinal axis of the spool.
FIG. 6 shows a cross sectional view of an injection mold used to manufacture a spool.
FIG. 7 shows a perspective view of the injection mold of FIG. 6 in an open position for ejection of the molded spool.
FIG. 8 shows a partial cross sectional view of the injection mold of FIG. 6 illustrating a mismatch between the mold halves.
FIG. 9 shows a partial perspective view of the spool showing the step caused by the mismatch between the mold halves as illustrated in FIG. 8.
FIG. 10 shows a partial perspective view of a spool illustrating flash.
FIG. 11 shows a partial perspective view of a spool illustrating drag marks.
FIG. 12 shows a perspective view of a two-part spool in accordance with the present invention, with the spool being shown in an assembled configuration.
FIG. 13 shows an exploded perspective view of the two members comprising the spool of FIG. 12.
FIG. 14 shows a perspective view of one member of the spool of FIGS. 12 and 13.
FIG. 15 shows a perspective view of an injection mold for the manufacture of the one member of the spool of FIG. 14, with the injection mold shown in an opened state with the one member of the spool being partially ejected.
FIG. 16 shows a partial cross-sectional view of the injection mold of FIG. 15 shown in a closed state.
FIG. 17 shows an enlarged perspective view of a portion of the injection mold of FIG. 15 with the one member of the spool being partially ejected.

### DETAILED DESCRIPTION OF THE INVENTION

The following is a detailed description of the preferred embodiments of the invention, reference being made to the drawings in which the same reference numerals identify the same elements of structure in each of the several figures.

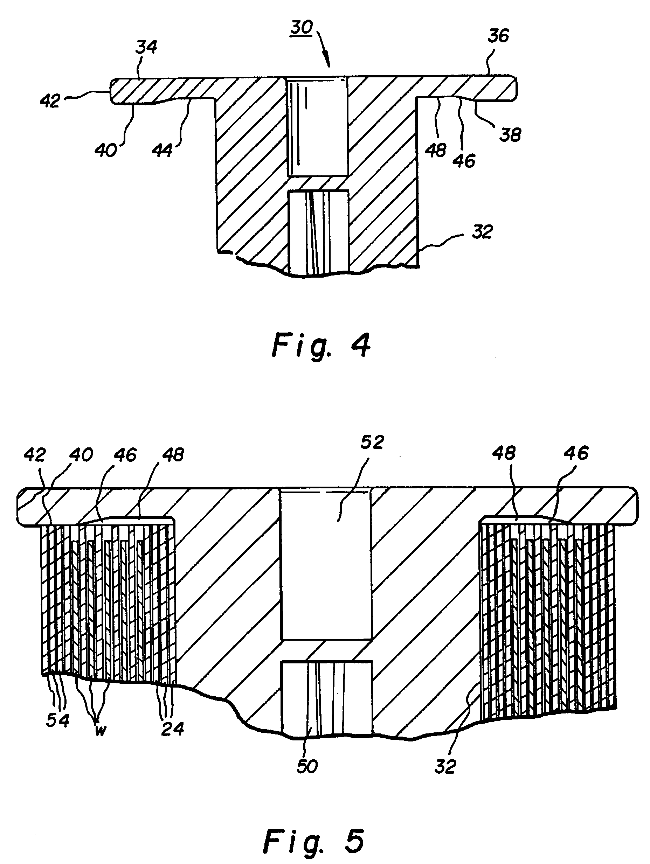

Referring to Figure 4, a spool 30 has a cylindrical core 32 and a flange disposed at opposite ends of the core. For illustrative purposes only, one flange 34 is shown. Each flange includes an outwardly facing surface 36 and an inwardly facing surface 38. Inwardly facing surface 38 of each flange includes a substantially planar outer portion 40 adjacent an outer edge 42 of the flange. Each inwardly facing surface 38 further includes a recessed portion 44 inboard of outer portion 40. Recessed portion 44 is defined by a transitional area 46 and an inner area 48. The outer portions of the two flanges form annular opposed surfaces.

As mentioned above and previously illustrated in Figure 3, 120 format film package includes backing material 24 disposed on one side of web material W along the entire length of the web material. The length of backing material 24 is greater than the length of the web material such that the extending portion (herein after referred to as leader L) of the backing material extends beyond the length of the web material. An extending portion may also be located at the other end of backing material (i.e., adjacent the spool), referred to as trailer T, to provide protection for the web material when the web material is wound after exposure in a cooperating apparatus. Referring now to Figure 5, to form a roll package with the example of the 120 format film package configuration and spool 30, a central slot 50 is generally provided to facilitate attachment of trailer T to core 32 at the start of the formation process. A drive socket 52 is provided to allow spool 30 to be rotationally driven by a cooperating drive apparatus during winding. First, several convolutions of trailer T of backing material 24 are wound about core 32 of spool 30 within inner area 48. Note that the width of backing material 24 is less than the distance between the recessed portions of the two flanges. As the roll package is further formed, convolutions of alternating web material and backing material 24 are wound about core 32 within inner area 48 and then transitional area 46. Note that the width of web material W is less than the width of the distance between the recessed portions of the two flanges, and also less than the width of backing material 24.

When all the web material is wound about core 32, a plurality of convolutions 54 of leader L of backing material 24 are further wound about core 32. When the plurality of convolutions 54 of leader L are further wound about core 32, the edges of the backing material of these convolutions are abutting outer portion 40. An interference of the backing material with outer portion 40 could result in a slight bending (or upturn) of the edges of the backing material against outer portion 40. Accordingly, the backing material and the outer portion of the flanges attempt to form a light-tight seal, thereby preventing light from exposing the enclosed light sensitive web material.

Applicants have discovered that light may be able to penetrate into the roll package. That is, a light-tight seal may not be formed between the edges of the backing material and the outer portion 40. Through detailed experimentation, Applicants have unexpectedly discovered that blemishes or imperfections on outer portion 40 adversely affect the formation of a light-tight seal between the edges of the backing material and the flange. Applicants' experimentation revealed that a surface roughness of greater than 25 microinches may result in a non-light-tight seal. Accordingly, Applicants desire a minimal surface roughness of less than 25 microinches, preferably less than 15 microinches, to provide a suitable light-tight seal.

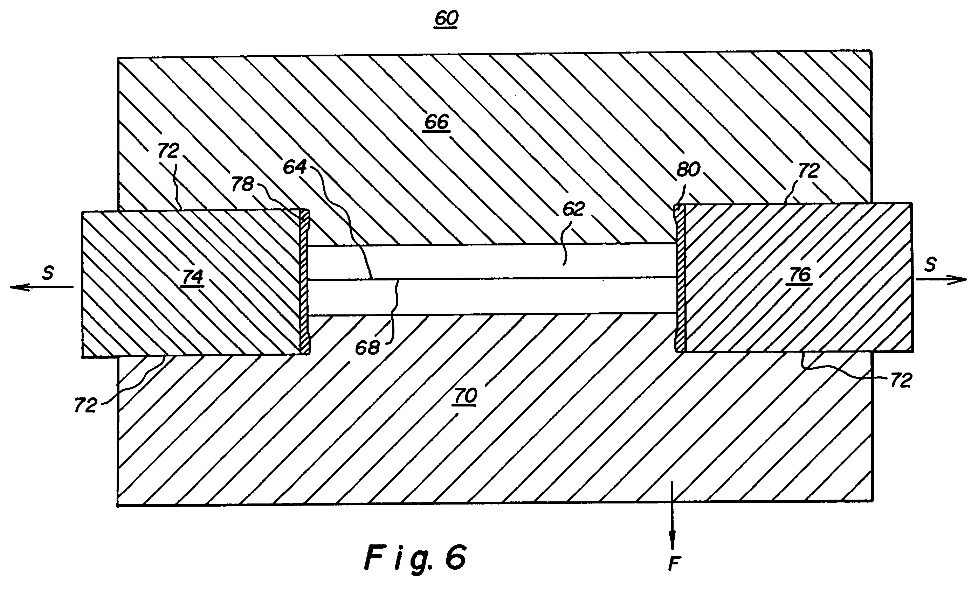

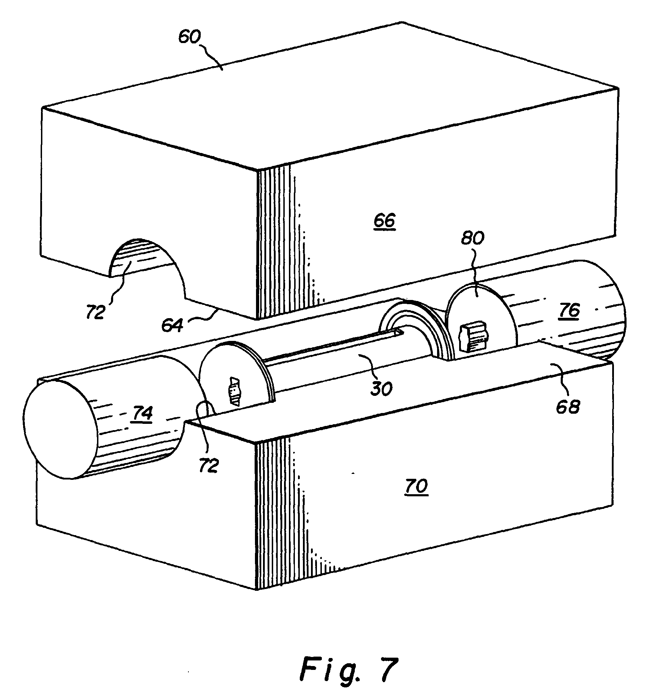

Applicants reviewed the manufacturing process by which spools are made. Spool 30 is commonly formed of a plastic material by the process known as injection molding. A cavity is formed within substantial metal plates, and molten plastic is injected into this cavity under extreme pressure. After a period of time, in which the molten plastic cools and solidifies, the metal plates are moved apart, to allow the spool to be ejected. Figure 6 shows a cross sectional view of the portions of an injection mold 60 which forms a typical cavity 62 for the manufacture of spool 30. Parting surface 64 of a stationary plate 66, and a parting surface 68 of moveable plate 70 abut each other, and each have machined from them a volume, representing one-half of the volume of spool 30, oriented such that the axis of the spool volume is coincident with parting surfaces 64, 68. Stationary plate 66 and moveable plate 70 also have machined from them semi-cylindrical volumes 72 adjacent each end of cavity 62. Semi-cylindrical volumes 72 receive side-draws 74,76 having respective end faces 78,80, whereby end faces 78,80 form opposite ends of cavity 62. After injecting cavity 62 with molten plastic material, and allowing sufficient time for the plastic material to cool and solidify, injection mold 60 is opened by withdrawing moveable plate 70 and side-draws 74,76 in the direction of F in Figure 6, while simultaneously slidably moving side-draws 74,76, relative to moveable plate 70, as depicted by arrows S in Figure 6. The open position of injection mold 60 with molded spool 30 ready for ejection is illustrated in Figure 7.

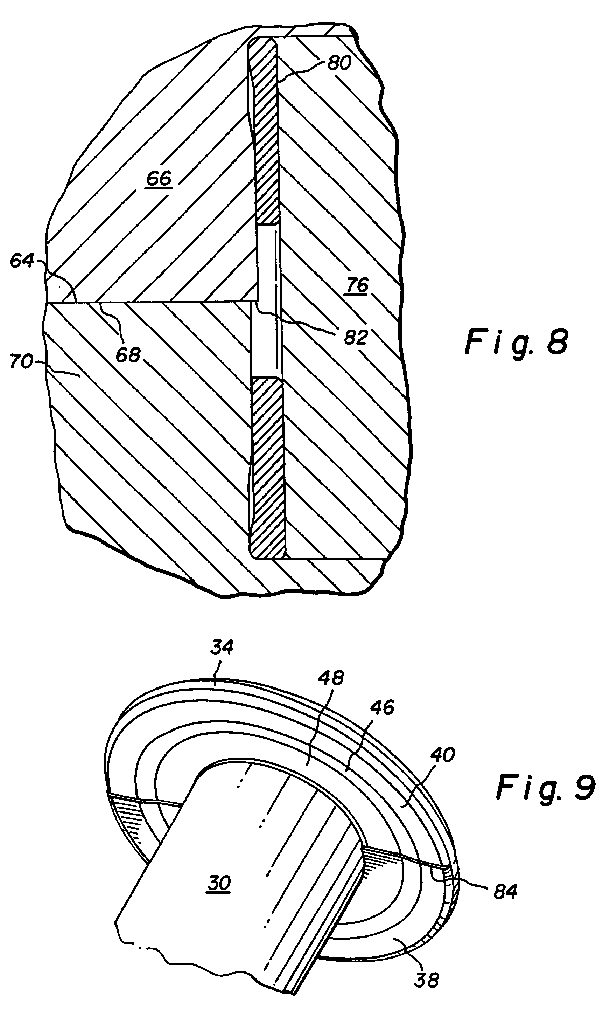

While spools produced in this manner may be generally suitable for use in the manufacture of rolled films, as noted above Applicants have determined that imperfections or blemishes in the surfaces of the flanges of such spools, particularly in outer portion 40, may impair the intimacy of contact between the edges of the outer convolutions of backing material 24 and outer portion 40 of spool 30, thereby allowing some light to reach the light sensitive web material. Such imperfections may be caused by a mismatch between the mold cavity halves wherein the surfaces of stationary plate 66, which form inwardly facing surfaces 38 of spool 30, do not precisely align with the corresponding surfaces of moveable plate 70. This mismatch 82, illustrated in Figure 8, may be caused by errors in the machining of the half volumes into each plate or by the misalignment of stationary plate 66 and moveable plate 70 when mold 60 is closed. Figure 9 depicts a spool flange 34 with a step 84 caused by a mismatch between cavity halves.

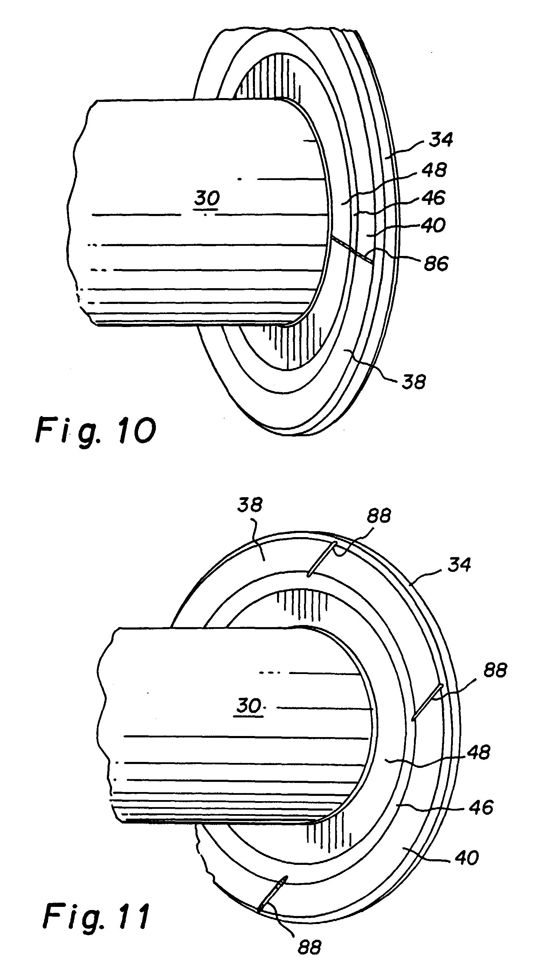

Another type of imperfection in the surfaces of flange 34 may be introduced when the edges of parting surfaces 64,68 become chipped or worn. Inwardly facing surface 38 of flange 34 would then have excess plastic material formed thereon. This excess material forms portions of a thin rib commonly referred to as flash. Figure 10 illustrates a spool flange with flash 86 caused by the wear of these edges.

Yet another type of imperfection in the surfaces of flange 34 may be introduced when the flanges are forced to deform axially outward as the spool is ejected from the moveable plate. As shown in Figure 11, scratches or grooves 88 in the surfaces of outer portion 40 may form. These are commonly referred to as drag marks.

While such imperfections can be tolerated to a certain degree, limiting the degree of these imperfections can result in undesirable increased cost in the fabrication of injection molds for the manufacture of spools and in the repair and replacement of such molds. The propensity to produce drag marks may unduly restrict the choice of material for the manufacture of spools, limit the extent of the recessed portion which can be manufactured, or require increased cooling time before the mold can be opened and the spools ejected. Furthermore, as the light sensitivity of web materials is further improved, the degree of allowable imperfections decreases.

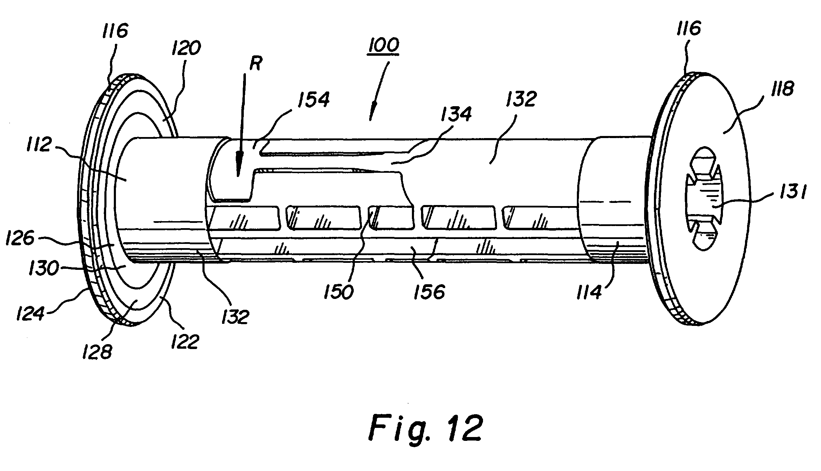

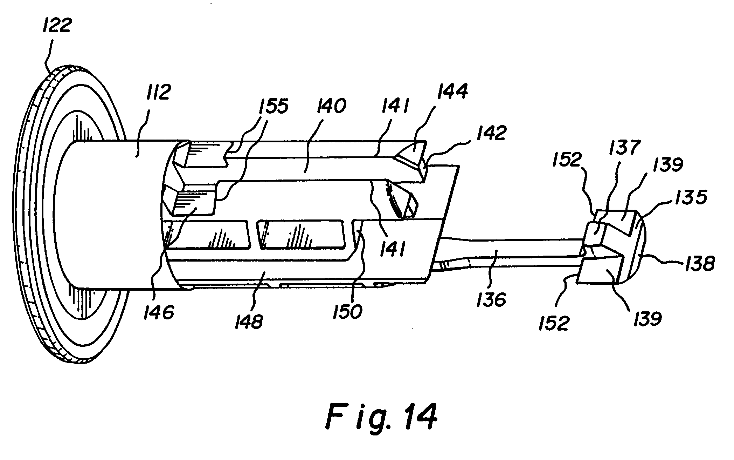

Accordingly, the present invention provides a spool in which such imperfections are not introduced into the flange during the injection molding process. Figures 12-14 illustrate a spool 100 in accordance with the present invention. Spool 100 comprises two substantially similar and complementary spool members 112,114. Each spool member 112,114 includes a flange 116 having an outwardly facing surface 118 and an inwardly facing surface 120. Inwardly facing surface 120 of each flange includes an outer portion 122 adjacent an outer edge 124 of the flange. Each inwardly facing surface 120 further includes a recessed portion 126 inboard of outer portion 122. Recessed portion 126 is defined by a transitional area 128 and an inner area 130. Formed within each spool member 112,114 on outwardly facing surface 118 is a drive socket 131 generally provided for mechanical cooperation with a cooperating apparatus (not shown) to rotate spool 100.

Each spool member 112,114 further includes a cylindrical core portion 132 adjacent flange 116. Extending from one end of cylindrical core portion, opposite the end having flange 116, is an engagement member 134 comprising an extending portion 136 and a locking portion 138. Locking portion 138 includes a chamfered end 135, a projection 137, and surfaces 139. Formed within each cylindrical core portion 132, opposite engagement member 134, is an axially arranged groove 140 having groove edges 141. An open end 142 of groove 140 is chamfered 144. Disposed within cylindrical core portion 132 along groove 140 at an end opposite open end 142, is a bore 146 configured to receive locking portion 138. Also formed within each cylindrical core portion 132 is a slot 148. A surface 150 adjacent groove 140 and slot 148 forms a mechanical stop, as will become more apparent.

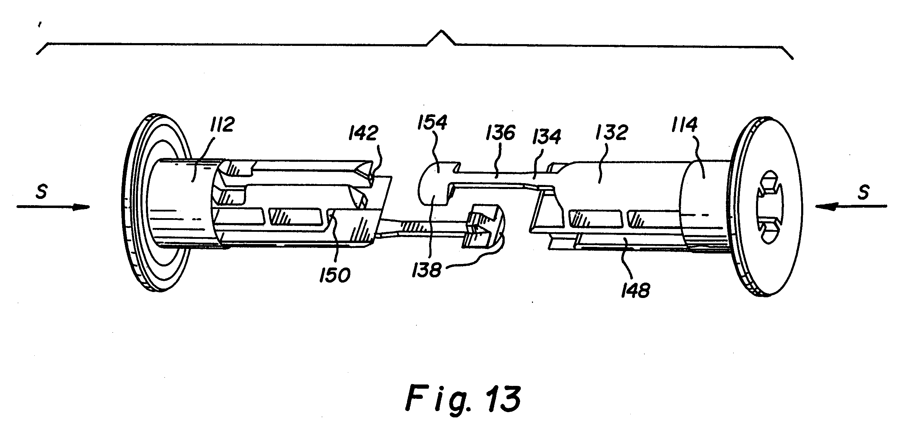

Spool 100 is assembled by inserting projection 137 of locking portion 138 into groove 140 of the other spool member, and slideably moving the spool members relative to the other in the direction shown by arrows S in Figure 13. Extending portions 136 flex and deflect whereby locking portion 138 slides along groove 140 of the other spool member until open end 142 of one spool member abuts stop surface 150 of the other spool member. In this configuration, a radial force, illustrated in Figure 12 by the arrow R, is applied to urge shoulders 152 of locking portion 138 into engagement with edges 154 of bore 146, whereby locking portion 138 is received within bore 146.

To facilitate assembly, chamfered end 135 of locking portion 138 cooperates with chamfered end 144 of groove 140 to deflect extending portion 136 of engagement member 134. Such deflection provides for the displacement of the locking portion 138 such that locking portion surfaces 139 slide along groove edges 141 until locking portion 138 is received by bore 146.

The distance from stop surface 150 to shoulders 152 of the locking portion may be slightly greater than the distance between open end 142 and edges 154 of bore 146. If slightly greater, locking portion 138 will freely drop into bore 146. However, with such a configuration, axial movement may occur between the two spool members, with the axial movement being substantially equal to the difference between the two distances.

In a preferred embodiment, the distance from stop surface 150 to shoulders 152 of the locking portion is slightly less than the distance between open end 142 and edges 155 of bore 146. If slightly less, locking portion 138 must be forced into (i.e., snapped) bore 146 of the other spool member, thereby promoting the abutment of open end 142 of one spool member with stop surface 150 of the other spool member. Also, if slightly less, no axial movement between the spool members occurs in the assembled configuration thereby promoting a consistent spacing between the opposed surface of outer portions 122 of inwardly facing surfaces 120 of the flanges.

When the two spool members are assembled, a contiguous cylindrical core is formed to support the web material and the light-shielding material. Note that an outer surface 154 of locking portion 138 forms a portion of this contiguous cylindrical core. In addition, a central slot 156 is formed by slots 148 to provide to facilitate attachment of the web material or light-shielding material onto spool 100.

Spool 100 can be disassembled by removing the locking portions from the bore and slidably moving the spool members relative to the other in the direction opposite that shown by arrows S in Figure 13.

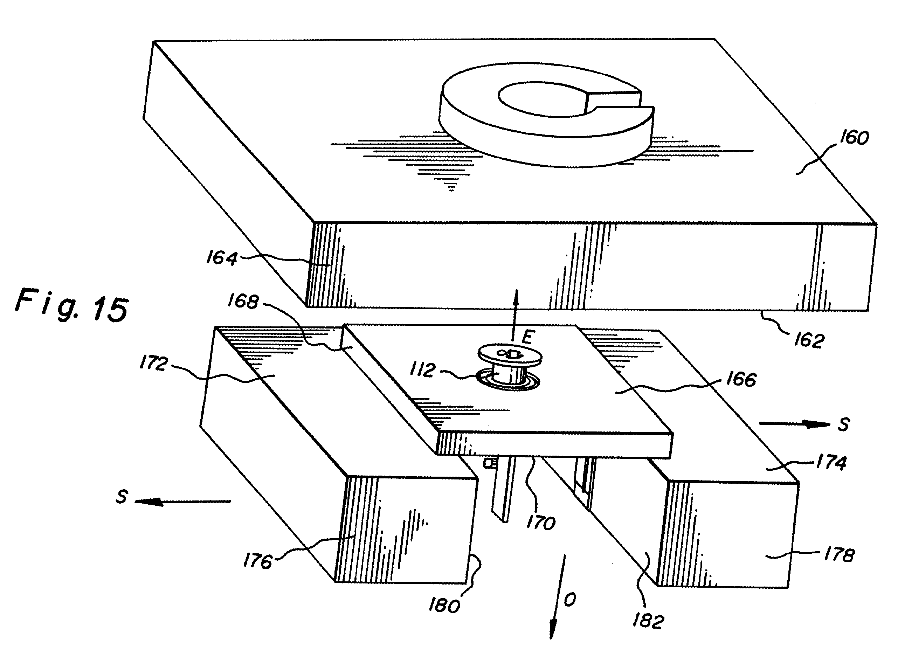

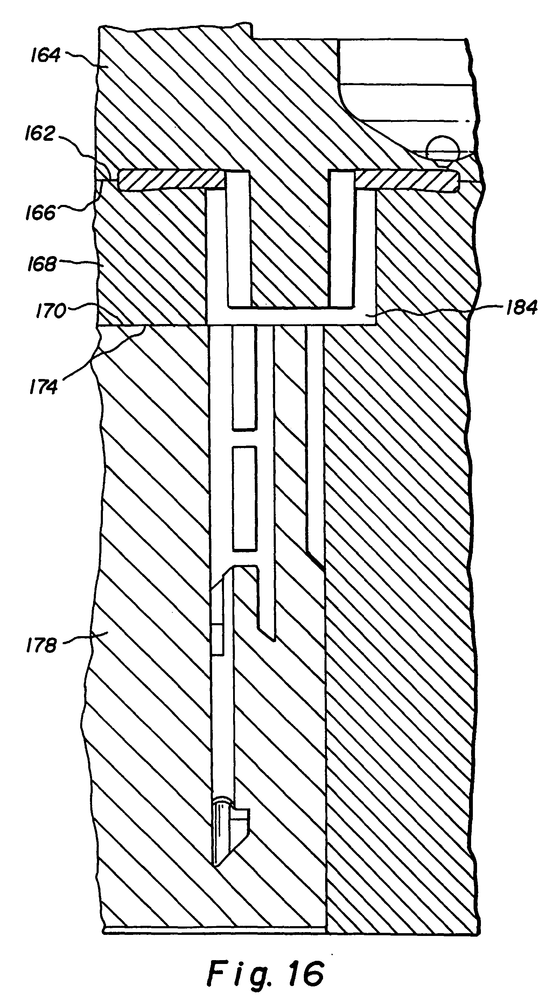

Spool 100 of the present invention can be manufactured using injection molding. Figures 15-17 illustrate an injection mold 160 suitable for manufacturing spool members 112,114 in accordance with the present invention. In the closed state, shown in Figure 16, awaiting the injection of a plastics material, a parting surface 162 of a stationary plate 164 abuts a parting surface 166 of a movable plate 168. A top surface 172, 174 of slides 176,178, respectively, slidably moves relative to a slide surface 170 of movable plate 168 until slide faces 180,182 abut. The abutment of slide faces 180,182 forms a portion of cavity 184 defining a portion of the spool member. The remaining portion of cavity 184 defining the remaining portion of the spool member is formed within stationary plate 164 and moveable plate 168. A plastic material is injected into cavity 184 by means known to those skilled in the art to form a spool member 112,114 in accordance with the present invention.

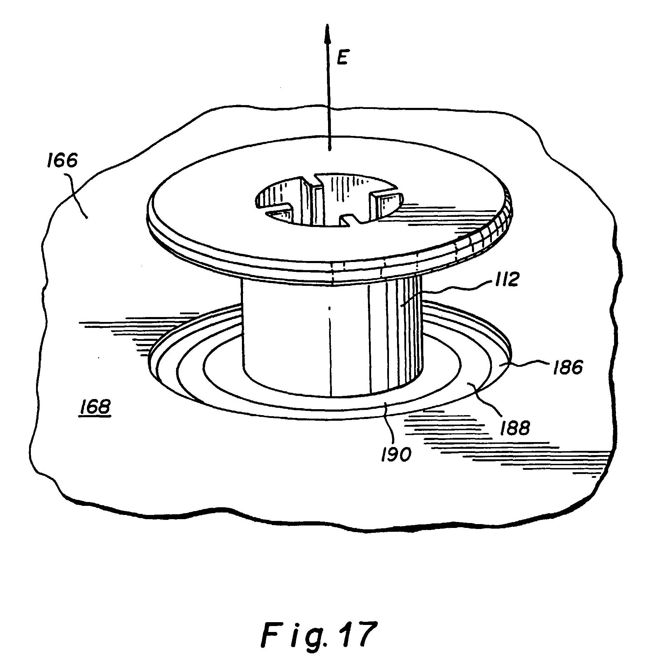

When injection mold 160 moves to it's open state, as illustrated in Figure 15, movable plate 168 and slides 176,178 move in the direction shown by arrow O. Slides 176,178 simultaneously move away from each other in the direction shown by arrows S, relative to movable plate 168. When injection mold 160 is in it's fully open state, spool member 112 is ejectable in the direction shown by arrow E in Figures 15 and 17.

Spool 100 formed using injection mold 160 shown in Figures 15-17 will be substantially imperfection and blemish free on inwardly facing surface 120 of a flange 116. Such imperfections and blemishes are not present since the portion of cavity 184 which forms the inwardly facing surface of the flange (i.e., an outer forming surface 186, a transition forming surface 188, and an inner forming surface 190 of cavity 184 as shown in Figure 17) is formed in its entirety within the unitary movable plate 168. Thus, no injection mold parting line is formed on the inwardly facing surface. Further, there are no edges to misalign and no edges to chip and wear. Consequently, mismatch steps and flash are substantially eliminated. In addition, since the direction of ejection of the spool member is normal to parting surface 166 of movable plate 168 (i.e., in a direction normal to the inwardly facing surface, stated alternatively, in a direction parallel to the axis of the cylindrical portion of the spool member), no portions of movable plate 168 slide across any portion of inwardly facing surface 120. Consequently, drag marks are substantially eliminated. As such, a surface roughness of less than 25 microinches can be obtained on inwardly facing surface 120 using an injection molding process.

While a roll package with the example of the 120 format film package configuration has been illustrated, those skilled in the art will recognize tat the two-part spool of the present invention can be used with other roll package configurations. For example, a leader, trailer, backing material, or any combination thereof can be used. Further, other configurations of spool members 112,114 may provide for an imperfection and blemish free inwardly facing surface of the flange. In addition, while spool members may be identical, those skilled in the art will recognize that spool members 112,114 need not be identical to provide such an imperfection and blemish free inwardly facing surface of the flange.

## Claims

1. A spool comprising a pair of complementary spool members, each of the spool members including a cylindrical portion and a flange having an inwardly facing surface and an outwardly facing surface, each spool member being comprised of a plastic material and individually formed by an injection molding process wherein the inwardly facing surface of each spool member is formed against a unitary mold component of an injection mold.

2. The spool according to Claim 1 wherein the flange has an outer edge and the inwardly facing surface includes an area adjacent the outer edge having a surface roughness of less than 25 microinches.

3. The spool according to Claim 1 wherein each cylindrical portion includes an axial groove which is open at one end and has a bore disposed at the opposite end, each spool member further including a flexible extending portion and a locking portion disposed at one end of the extending portion adapted to be received within the bore.

4. The spool according to Claim 3 wherein the locking portion has a projection, and the projection of one spool member slideably moves within the groove of the other spool member.

5. The spool according to Claim 3 wherein the extending portion of one spool member is disposed within the axial groove of the other spool member to form a contiguous cylindrical core.

6. The spool according to Claim 1 wherein the spool members are substantially identical.

7. A spool for supporting a length of photosensitive web material, comprising a pair of complementary spool members formed of a plastic material by an injection molding process, each of the spool members including a cylindrical portion and a flange, the flange having an outer edge and an inwardly facing surface, each inwardly facing surface including a substantially planar area adjacent the outer edge having a surface roughness of less than 25 microinches.

8. The spool according to Claim 7 wherein a mold parting line is not disposed on the inwardly facing surface.

9. A roll package comprising:
a spool comprising a pair of complementary spool members formed of a plastic material by an injection molding process, each of the spool members including a cylindrical portion and a flange, the flange having an outer edge and an inwardly facing surface, each inwardly facing surface including a substantially planar area adjacent the outer edge having a surface roughness of less than 25 microinches;
a length of web material wound about the spool between the flanges; and
a length of a light-shielding material wound about the wound length of web material between the flanges.

10. A method of making a spool member comprising a cylindrical portion and a flange having an inwardly facing surface, the method comprising:
providing a mold cavity;
injecting molten plastic material into the mold cavity;
forming the inwardly facing surface against a unitary mold component of the mold cavity; and
ejecting the molded spool in a direction normal to the inwardly facing surface.
